# EUROPÄISCHE PATENTSCHRIFT

(11) **EP 2 199 787 B1**
(45) Veröffentlichungstag und Bekanntmachung des Hinweises auf die Patenterteilung: **22.02.2017**
(21) Anmeldenummer: 09015039.2
(22) Anmeldetag: 04.12.2009
(51) Int. Cl.: G01N 29/14, G01N 29/22

(54) **Schallemissionsprüfung bei Flüssiggasbehältern**
Acoustic emission testing for liquid gas containers
Vérification par émission d'ondes dans des récipients de gaz liquide

(30) Priorität: 19.12.2008 DE 102008063948
(43) Veröffentlichungstag der Anmeldung: 23.06.2010
(73) Patentinhaber: TSG Technische Service Gesellschaft mbH, 99096 Erfurt (DE)
(72) Erfinder: Schöpe, Jörg, 99706 Sondershausen (DE); Kragulj, Walter, 2117 Grossrussbach (AT); Türk, Andreas, 99869 Haina (DE)
(74) Vertreter: Schwahn, Hartmut

(56) Entgegenhaltungen:
- WO-A2-03/081228
- AT-B- 413 155
- DE-A1- 19 808 636
- US-A- 4 364 161
- HARRIS ET AL: "Verification of Structural Integrity of Pressure Vessels by Acoustic Emission and Periodic Proof Testing", ASTM SPECIAL TECHNICAL PUBLICATION, AMERICAN SOCIETY FOR TESTING AND MATERIALS, Bd. 515, 1. Januar 1972 (1972-01-01), Seiten 158-170, XP009156878, ISSN: 1071-720X

## Beschreibung

Die Erfindung betrifft Verfahren zur Prüfung von Druckgasbehältern für Flüssiggas, wobei während der Druckaufbringung die im Behälter entstehenden akustischen Ereignisse (Schallemissionen) registriert und bewertet werden.

### Stand der Technik

Druckbehälter (Gastanks) zur Lagerung/Speicherung von Flüssiggas, beispielsweise für Heizzwecke in Wohngebäuden und gewerbliche Kleinbetriebe werden erdgedeckt, das heißt unterirdisch, ausgeführt. Gängige Ausführungen sind auch halberdgedeckte (halbunterirdische) sowie komplett oberirdisch gelagerte Druckbehälter. Druckbehälter kommen auch in mobiler Form als Tankfahrzeuge vor.

Die Sicherheits- und Betriebsbestimmungen verlangen eine sicherheitstechnische Überprüfung solcher Druckbehälter zu wiederkehrenden Zeitpunkten, die sogenannte wiederkehrende Prüfung. Druckbehälter, und darunter vor allem Flüssiggaslagerbehälter, sind mechanisch hoch belastet. Die Behälterwände unterliegen Korrosion und Materialalterung. Insbesondere alterungsbedingte Rissbildungen in der Behälterwand, Schwächung des Materialgefüges sowie korrodierte oder fehlerhaft ausgeführte Schweißnähte können unter Druckbelastung, und vor allem bei zusätzlicher mechanischer oder thermischer Beanspruchung, beispielsweise durch Vibrationen (Tankwagen) oder Witterungseinflüsse, zu großen Schadstellen auswachsen, die zu Leckagen oder zum Bersten des Behälters führen können. Eine regelmäßige Überprüfung und Beurteilung des Zustands von Druckbehältern ist erforderlich, um deren Betriebssicherheit zu gewährleisten.

Neben der Sichtprüfung der Druckbehälter von außen und innen erfordert die Prüfung auch eine Funktionsprüfung in Form einer Druckprüfung. In den gängigen Prüfverfahren wird dazu der Behälter entleert, geöffnet, gesäubert und anschließend durch Druckaufbringen mittels Luft, Inertgas (Prüfgas) oder Wasser (Wasserdruckprüfung) bis zum Erreichen eines vorbestimmten Prüfdruckes mit Druck beaufschlagt. Nach Abschluss dieses Drucktests sind dann regelmäßig weitere Wartungsarbeiten wie Entleeren des Behälters vom Prüfgas beziehungsweise Trocknen des Behälterinnenraums erforderlich. Vor allem durch das Einbringen von Wasser in den Behälterinnenraum bei der Wasserdruckprüfung kann zusätzlich Korrosion ausgelöst werden, vor allem in Vorschädigungen wie Haarrissen und fehlerhaften Schweißnähten. Prüfgas und Flüssiggasreste können gegebenenfalls explosionsgefährliche Mischungen bilden. Außerdem ist das Entleeren und Wiederbefüllen des Druckbehälters mit Flüssiggas mit hohen Gefahren verbunden. Über den ganzen Prüfvorgang hinweg, einschließlich Entleeren und Wiederbefüllen des Tanks, ist somit eine Benutzung der an den Tank angeschlossenen Verbraucher unmöglich; Betriebsausfälle sind jedoch unerwünscht.

Um diese Nachteile zu vermeiden, wurde ein alternatives Prüfverfahren entwickelt, welches auf der Messung der bei der Druckaufbringung in der Behälterwand entstehenden Schallemissionen (akustische Ereignisse, AE) beruht. Zur Schallemissionsmessung wird der betriebsbereite Tank, der noch mit dem Betriebsgas gefüllt sein muss, mit einem von außen zugeführten Prüfgas mit Druck beaufschlagt. Dieses Prüfgas kann ein Prüfgas, das Betriebsgas (Flüssiggas) selbst oder ein dem Betriebsgas ähnliches Gas sein. Während der Drucksteigerung werden Schallemissionen, die am Druckbehälter auftreten, mit an der Behälterwand gezielt angebrachten Schallsensoren gemessen. Eine Signalbewertung erfolgt in der Regel im Anschluss an die aktive Prüfung/Messung. Als Schallsensoren werden üblicherweise Piezoelemente verwendet, welche die überwiegend im Ultraschallbereich liegenden Schallemissionen in elektrische Spannungen umwandeln.

Wird ein Druckbehälter mit Druck beaufschlagt, kommt es mit zunehmender Druckbelastung der Behälterwand zur elastischen Verformung. Die dabei in Werkstoff und Oberfläche entstehenden akustischen Ereignisse geben Hinweise auf die Materialbeschaffenheit, insbesondere auf den Alterungszustand, Korrosionszustand oder auf Rissbildung im Werkstoff. Die Schallemission in Druckbehältern beruht im Prinzip auf dynamischen Verschiebungen im Nanometerbereich vorwiegend an der Oberfläche der Behälterwand. Plötzliche Spannungsänderungen im Werkstoff werden durch sehr kleine Materialverschiebungen, zum Beispiel in Folge einer Rückfederung des Materials bei schnell ablaufenden Prozessen wie Mikrorissbildung, Rissfortschritt, Rissuferreibungen etc., generiert. Sie werden als akustische Wellen in Form sogenannter akustischer Ereignisse (AE) messbar.

Nachteilig im Stand der Technik ist, dass die Kriterien, welche für die akustische Beurteilung des Zustandes des Druckgasbehälters herangezogen werden, noch weitgehend unklar und uneinheitlich sind. Ein grundlegendes, noch ungelöstes Problem ist bis heute die Klassifikation und Interpretation der bei der Schallemissionsprüfung registrierten akustischen Ereignisse, um den Zustand des Druckbehälters und damit seine weitere Verwendung (Weiterbetreiben, Reparieren, Aussondern) beurteilen zu können. Im Stand der Technik wird vorausgesetzt, dass die Schallemissionsprüfung durch erfahrene Kräfte durchgeführt wird, die mit der anspruchsvollen Auswertung der registrierten Schallemissionssignale vertraut sind. Aufgrund fehlender einheitlicher Kriterien hat sich deshalb in der Prüfpraxis die Schallemissionsprüfung trotz auf der Hand liegender Vorteile noch nicht durchsetzen können.

### Aufgabenstellung

Die Erfindung hat sich zur Aufgabe gemacht, bestehende Schallemissionsprüfverfahren für Druckbehälter für Flüssiggas, besonders für erdgedeckte, halberdgedeckte, oberirdische sowie ortsbewegliche (Gasflaschen, Tankfahrzeuge, Tankauflieger) Druckgasbehälter, insbesondere Flüssiggaslagertanks, zu verbessern. Die Behälterprüfung soll möglichst ohne Interaktion mit Prüfpersonal nach möglichst objektiven Kriterien, und zwar automatisch ablaufen. Subjektive Beurteilungen sollen verhindert und zügige und genauere Analyse und Handlungsanweisungen ermöglicht werden.

Das der vorliegenden Erfindung zugrundeliegende technische Problem besteht vor allem darin, ein verbessertes Verfahren zur Prüfung von Druckbehältern durch Schallemissionsmessung bereitzustellen, welches einfach durchzuführen ist und zuverlässige Aussagen über den Zustand des Druckbehälters zulässt, insbesondere ohne dass auf weitere aufwändige Analysen oder unmittelbar auf menschliche Erfahrung und Einschätzung zurückgegriffen werden muss.

Die Erfindung löst dieses technische Problem durch das Verfahren gemäß Anspruch 1. Das erfundene Verfahren basiert dabei vor allem auf einem Prüfzyklus, wobei der Druck im zu prüfenden Druckbehälter, vornehmlich kontinuierlich und stetig, in Richtung eines Druckendwerts Prüfdruck gesteigert wird (Druckaufbringung). Während der Druckaufbringung werden die in der Behälterwand entstehenden akustischen Ereignisse, vorzugsweise in an sich bekannter Weise mit Sensoren, registriert. Die Erfindung sieht in einer bevorzugten Variante vor, dass die akustischen Ereignisse nicht nur während der Drucksteigerung, sondern auch noch nach Erreichen des Druckendwerts weiter registriert werden. Bevorzugt wird der Prüfzyklus mit einem um 10 % erhöhten Druck(end)wert wiederholt. Konkrete Angaben zum Prüfablauf und zum Druckverlauf sind nachstehend angeführt, wobei die Erfindung nicht ausschließlich auf diese Ausführungen beschränkt ist.

Erfindungsgemäß werden die zur Bewertung des Zustandes des Druckbehälters registrierten akustischen Ereignisse nach folgenden, besonders eindeutig und einfach bestimmbaren, Kriterien klassifiziert:
Die akustischen Ereignisse werden in Klasse A (= geringe Quellen, unkritisch) kategorisiert, wenn die Zahl der transienten akustischen Ereignisse (Hits) pro 1 bar Drucksteigerung die Zahl 400 nicht überschreitet und/oder die Zahl der Überschwinger (Counts) in einem transienten akustischen Ereignis innerhalb eines Registrierintervalls von 18 Sekunden, bevorzugt innerhalb einer Toleranz von bevorzugt +/- 2 Sekunden, besonders bevorzugt +/- 1 Sekunde, weiter bevorzugt +/- 0,5 Sekunden, die Zahl 400 nicht überschreitet, wobei bei keinem der transienten akustischen Ereignisse eine Maximalamplitude von 75 dB-AE (Acoustic Emission) überschritten wird.

Die registrierten akustischen Ereignisse werden in Klasse B (= aktive Quellen) kategorisiert, wenn die Zahl der transienten akustischen Ereignisse (Hits) pro 1 bar Drucksteigerung mehr als 400 und nicht mehr als 2.000 beträgt und/oder die Zahl der Überschwinger (Counts) in einem transienten akustischen Ereignis innerhalb eines Registrierintervalls von 18 Sekunden, bevorzugt innerhalb einer Toleranz von bevorzugt +/- 2 Sekunden, besonders bevorzugt +/- 1 Sekunde, weiter bevorzugt +/- 0,5 Sekunden, mehr als 400 aber nicht mehr als 4.000 beträgt und bei nicht mehr als 6 der registrierten transienten akustischen Ereignisse (Hits) eine Maximalamplitude von 75 dB-AE überschritten wird.

Die registrierten akustischen Ereignisse werden in Klasse C (= kritische Quellen) kategorisiert, (a) wenn mindestens einer der für die Klasse B genannten Parameter überschritten wird oder (b) wenn ein Druckbehälter geprüft wird, bei welchem bei einer vorangehenden erfindungsgemäßen Druckprüfung die registrierten akustischen Ereignisse in Klasse B kategorisiert wurden und bei der erneuten Druckprüfung mit einem, bevorzugt um 10 %, gegenüber der vorangehenden Druckprüfung erhöhten Druckendwert die registrierten akustischen Ereignisse wiederum in Klasse B kategorisiert werden. Ein Druckbehälter, welcher bei der erfindungsgemäßen Druckprüfung akustische Ereignisse aufweist, welche in Klasse C fallen, hat die Druckprüfung nicht bestanden; die Betriebssicherheit kann nicht mehr gewährleistet werden.

Die Erfindung sieht also die Klassifizierung der bei der Schallemissionsprüfung registrierten akustischen Ereignisse in drei Klassen, A, B und C vor. Die Erfinder fanden, dass durch diese Kategorisierung eine besonders einfache, schnelle und sichere, das heißt eindeutige und verlässliche Beurteilung der Betriebssicherheit der zu prüfenden Druckbehälter erfolgen kann. So wird das zugrundeliegende technische Problem im Wesentlichen vollständig gelöst.

Vorzugsweise ist die Kategorisierung in einem automatischen Analysesystem implementiert, sodass eine vollautomatische Prüfung und Beurteilung bereits während und/oder unmittelbar nach der Messung durchgeführt und abgeschlossen werden kann. Prüfablauf und Prüfergebnis richten sich dabei ansonsten vorzugsweise nach den einschlägigen etablierten Normen und Richtlinien für die Sicherheitsprüfung von Druckbehältern. Das erfindungsgemäße Verfahren kann deshalb vorteilhafterweise mittels bekannter und auf dem Markt befindlicher Systeme zur Registrierung von Schallemissionen durchgeführt werden, wobei gegebenenfalls nur geringe Anpassungen an den erfindungsgemäßen Verfahrensablauf erforderlich werden. Hauptanpassung ist dabei die Implementierung der erfindungsgemäßen Kategorisierung und gegebenenfalls die erfindungsgemäß definierten Abbruchkriterien (siehe unten).

Im Zusammenhang mit der Erfindung werden folgende an sich bekannte Definitionen verwendet: Ein akustisches Ereignis oder "Hit" besteht regelmäßig aus einem "Burst", das heißt einer schnellen Abfolge einer Gruppe von Schwingungen/Auslenkungen, welche auch als "Überschwinger" bezeichnet werden. Auswertbare Merkmale eines registrierten Hits oder Bursts sind die Ankunftszeit (= absolute Zeit der ersten Schwellenüberschreitung), die Maximalamplitude der Überschwingungen, die Anstiegszeit (= Zeitintervall zwischen erster Schwellenüberschreitung und Zeitpunkt der Maximalamplitude), Signaldauer (= Zeitintervall zwischen erster und letzter Schwellenüberschreitung), Zahl der Überschwingungen innerhalb eines Hits, auch "Counts" genannt (= Zahl der Überschreitungen der Schwelle in einer Polaritätsrichtung), akustische Energie (= Integral der quadrierten oder absoluten Momentanwerte des Spannungsverlaufs am Sensor). Diese akustischen Parameter können bekanntermaßen verglichen und/oder gegeneinander aufgerechnet werden, um Kriterien für die Beurteilung des Zustandes des geprüften Druckbehälters zu erhalten. Die erfindungsgemäße Neuerung macht sich nun eine gezielte Auswahl bestimmter akustischer Parameter daraus, nämlich die absolute Anzahl der akustischen Ereignisse (Hits) sowie die Zahl der Überschwingungen (Counts) innerhalb eines einzigen akustischen Ereignisses zu nutze, um eine einfache, schnelle und sichere Kategorisierung der akustischen Ereignisse und damit eine einfache und sichere Beurteilung des Behälterzustandes zu erreichen.

Die offizielle Bewertung und Klassifizierung der Druckbehälter (Prüfobjekte), welche bevorzugt auch die konkrete Handlungsanweisung zur weiteren Verwendung des Druckbehälters enthält, kann nach Abschluss des erfindungsgemäßen automatisierten Prüfverfahrens durch das Prüfpersonal, bevorzugt vollständig und abschließend, vor Ort durchgeführt werden. Ein weiterer Vorteil des automatisierten Prüfverfahrens besteht darin, dass auftretende kritische Behälterzustände, die sich vor allem während des Prüfablaufs einstellen können und die Sicherheit gefährden, unmittelbar und eindeutig erkannt und sofort entsprechende Maßnahmen eingeleitet werden können. Es wird eine einfache und sichere Echtzeitüberwachung der laufenden Druckprüfung mit festgelegten Auswertekriterien und/oder Alarmkriterien ermöglicht, welche die schnelle und sichere Durchführung der Druckprüfung erlaubt.

Die Erfindung sieht bevorzugt vor, dass die Klassifizierung anhand von akustischen Ereignissen erfolgt, welche während der Druckaufbringung im Bereich von 8 bar (Startwert) bis 13 bar (Endwert), besonders von 8 bis 10 bar registriert werden können. Die mittlere Drucksteigerungsrate während der Druckaufbringung im Prüfablauf beträgt bevorzugt von 0,1 bis 0,5, besonders bevorzugt von 0,2 bis 0,3 bar pro Minute. Die bei der Druckaufbringung zu erreichenden Prüfdrücke oder Druck(end)werte betragen bevorzugt 10 bar oder mehr, besonders bei erdgedeckten Flüssiggaslagerbehältern, beziehungsweise 12,5 bar oder mehr, besonders bei halberdgedeckten oder oberirdischen Flüssiggaslagerbehältern. Die Druckerhöhung erfolgt vorzugsweise mindestens 10 % über den je vorhandenen Behälterdruck oder Betriebsdruck.

Die Erfindung sieht außerdem bevorzugt vor, dass folgende Prüfdrücke auch beim wiederholten Durchlauf de Prüfvorgangs nicht überschritten werden (zul. Betriebsüberdruck): bei oberirdischen und halboberirdischen (halberdgedeckten) Behältern: nicht mehr als 16 bar, bevorzugt nicht mehr als 15,6 bar; bei unterirdischen (erdgedeckten) Behältern: 12,1 bar. Gegebenenfalls ist je nach Bauart auch bei unterirdischen Behältern ein maximaler Betriebsüberdruck von 15 bar, bevorzugt von 15,6 bar zulässig. In diesem Fall kann der Druckendwert beim ersten oder wiederholten Durchlauf der Schallemissionsprüfung auch bis an diesen Grenzwert heranreichen.

Werden während der Drucksteigerung auffällige Anzeichen detektiert, welche auf eine akustische Quelle der Klasse B oder C hindeuten, wird bevorzugt zunächst eine Haltephase eingelegt. Diese beträgt bevorzugt von 3 bis 8 Minuten, besonders bevorzugt 5 Minuten. Während dieser Haltephase findet keine Drucksteigerung bevorzugt durch externe Maßnahmen wie Pumpe oder Wärmetauscher statt. Nach Erreichen des Prüfdruckes oder Druckendwerts die weiteren akustischen Aktivitäten über bevorzugt einen Zeitraum von 5 Minuten oder mehr registriert, wobei keine weitere mehr Druckerhöhung erfolgt.

Ein Prüfzyklus ist also besonders dadurch charakterisiert, dass der Druck im Druckbehälter, ausgehend von einem Druckbasiswert (Startwert), welcher in der Regel dem Betriebsdruck des Behälters entspricht, insbesondere kontinuierlich stetig gesteigert wird, bis ein Druckendwert erreicht wird. Dieser Druckendwert wird gegebenenfalls über den oben genannten Zeitraum gehalten. Anschließend wird der Druck wieder auf den Basiswert reduziert.

Die Erfindung sieht nun bevorzugt vor, dass bei einem bevorzugt zeitlich unmittelbar nachfolgendem ergänzenden Prüfzyklus erneut eine Druckaufbringung, beginnend vom Druckbasiswert erfolgt, wobei der angestrebte Druckendwert aber nun erhöht ist. Dieser liegt vorzugsweise etwa oder genau 10 % über dem im vorausgegangenen Prüfzyklus erreichten Druckendwert. Die unmittelbare Wiederholung des Prüfzyklus ist vor allem dann erforderlich, wenn bei einem ersten Prüfdurchgang akustische Ereignisse registriert werden, welche in Klasse B kategorisierbar sind.

Bevorzugt sieht die Erfindung vor, dass die Druckaufbringung während eines Prüfzyklus unterbrochen und gegebenenfalls vollständig abgebrochen wird, sobald akustische Ereignisse registriert werden, welche die Kriterien der Klasse C, erfüllen. Dieser Zustand wird als Abbruchkriterium definiert. So können kritische Behälterzustände unmittelbar erkannt werden. Wird die Prüfung aus diesem Grund abgebrochen, hat der Behälter die Druckprüfung nicht bestanden. Ein weiterer Betrieb ist nicht mehr möglich.

Die Erfindung sieht weiter vor, dass bei einer Kategorisierung der registrierten akustischen Ereignisse in Klasse B, nicht aber in Klasse C, anschließend an ein oder mehrere Prüfzyklen der Schallemissionsprüfung eine ergänzende Prüfung durchgeführt wird. Bevorzugt ist die ergänzende Prüfung Teil eines klassischen Prüfverfahrens, ausgewählt aus: innerer Prüfung der Schweißnähte (Sichtprüfung) und Wasserdruckprüfung, vorzugsweise mit erhöhtem Prüfdruck. Diese Prüfverfahren werden in an sich bekannter Weise durchgeführt.

Durch Störeinflüsse während der Druckprüfung können gegebenenfalls akustische Quellen registriert werden, die in die Klasse B oder C kategorisierbar sind, deren Ursache aber nicht auf typische schnelle Vorgänge in der Behälterwand zurückzuführen sind. Solche sind beispielsweise Ventilklappern, Gasentnahme durch Verbraucher, unmittelbare Witterungseinflüsse (Eisbildung, thermische Spannungen) etc. Die Erfindung sieht vor, solche Störquellen durch weitergehende Signalanalyse automatisch und/oder in Verbindung mit dem Prüfpersonal zu kategorisieren. Der Prüfablauf sieht dazu insbesondere automatisiert erscheinende Abfragen/Anzeigen in der Bedienoberfläche des Analysesystems vor, die das Prüfpersonal befragen und/oder zum Ausschluss der Störquellen auffordern (Expertensystem). Sind derartige Quellen eindeutig als Störquellen identifiziert, sieht die Erfindung vor, dass die Druckprüfung nach deren Beseitigung weitergeführt wird. In diesem Fall ist bevorzugt vorgesehen, die Drucksteigerung von etwa oder bevorzugt genau 10 % über jenem Druck zu führen, welcher vor Auftreten des Störeinflusses im Behälter vorhanden war, vorzugsweise jedoch bis zum höchsten oben genannten maximalen Druckendwert.

Bevorzugt erfolgt die Druckaufbringung über externe Mittel. Neben handbetriebenen Kolbenpumpen und motorisch betriebenen Druckpumpen ist vor allem eine Druckaufbringung bevorzugt, welche dadurch gekennzeichnet ist, dass sie frei von impulsbehafteter Strömung ist. Dies ist besonders günstig, um die Registrierung der akustischen Ereignisse der Behälterwand nicht durch unerwünschte Nebengeräusche, welche durch Impulswellen aus der externen Druckaufbringung hervorgerufen werden, zu stören.

Bevorzugt ist deshalb eine Druckaufbringung, welche ausschließlich mittels Verdampfung eines verdampfbaren Mediums erfolgt. Die Erfindung sieht bevorzugt vor, dass die Verdampfung des Mediums in mindestens einer externen Druckvorlage erfolgt, welche mit dem zu prüfenden Druckbehälter in Verbindung steht. Vorzugsweise ist dieses verdampfbare Medium das Betriebsgas des Druckbehälters, bevorzugt also Flüssiggas. In einer bevorzugten Variante ist vorgesehen, dass das verdampfbare Medium allgemein aus Medien ausgewählt ist, die einen so hohen Dampfdruck aufweisen, dass bei einer Temperaturerhöhung in einem technisch zweckmäßig realisierbaren Rahmen, das heißt bevorzugt bei Temperaturen von 30°C bis 60°C, mindestens der gewählte Druckendwert im Druckbehälter erzeugt werden kann. Dazu soll durch die Erwärmung der Druckvorlage bevorzugt ein Druck erzeugt werden, der über, bevorzugt 50 %, besonders bevorzugt etwa 100 %, über dem gewählten Druckendwert liegt. In der Praxis sind Drücke von 15 bis 22 bar zweckmäßig.

Besonders bevorzugt bildet das so verdampfbare Medium mit dem im zu prüfenden Druckbehälter gegebenenfalls noch vorhandenen Betriebsgas (Flüssiggas) ein zündfähiges Gemisch. Dadurch wird vorteilhafterweise vermieden, dass das Flüssiggas im zu prüfenden Druckbehälter zur bestimmungsgemäßen Verwendung unbrauchbar wird. Beispielsweise kann für Butantankanlagen als verdampfbares Medium Propan eingesetzt werden; das Flüssiggas Butan selbst steht aufgrund seines geringen Dampfdrucks für die Druckaufbringung mittels Verdampfung in einer Druckvorlage zweckmäßigerweise nicht zur Verfügung.

Die Temperaturerhöhung in der externen Druckvorlage erfolgt bevorzugt durch mindestens einen Wärmetauscher, welcher mit der externen Druckvorlage verbunden ist. Der Wärmetauscher wird bevorzugt über ein Wasser-basiertes Heizmedium (z. B. Wasser mit alkoholischem Frostschutz betrieben). Die Druckaufbringung erfolgt in einer Variante über die Gasphase. In einer bevorzugten alternativen Variante steht die externe Druckvorlage mit dem Druckbehälter über die Flüssigphase in Verbindung, sodass die Druckaufbringung über die Flüssigphase erfolgt. Folgende Temperaturen und Drücke sollen nicht überschritten werden: Medium des Wärmetauschers: 60°C / 3 bar; Medium der Druckvorlage (Betriebsgas/Flüssiggas): 60°C / 22 bar.

Bevorzugt wird die Drucksteigerungsrate in Druckbehältern während der erfindungsgemäßen Drucksteigerung über mindestens eine Düse oder Kugelhahn, welche oder welcher in der Verbindungsleitung zwischen Druckbehälter und externer Druckvorlage angeordnet ist, gesteuert oder geregelt. Die Steuerung/Regelung erfolgt bevorzugt automatisch und gekoppelt an den erfindungsgemäßen Prüfzyklus.

Zur Registrierung der akustischen Ereignisse werden je nach Behälter zwei oder mehrere Sensoren mit geeigneten Koppelmitteln an der Behälteroberfläche angebracht. Die Koppelmittel stellen die akustische Kopplung zwischen Behälterwand und Sensor sicher. Im einfachsten Fall findet eine magnetische Kopplung statt. Gegebenenfalls werden die Sensoren mit mechanischer Vorspannung gegen die Behälterwand gepresst. Ist eine dämmende Beschichtung (z. B. Bitumen) vorhanden, ist es zweckmäßig diese zwischen Behälterwand und Sensor zu entfernen, um eine ausreichende akustische Kopplung der Sensoren zu gewährleisten. Für die Schallemissionsprüfung finden bevorzugt piezoelektrische AE-Schallsensoren Verwendung. Der Frequenzbereich der einzusetzenden Sensoren ergibt sich im Wesentlichen aus der Schallschwächungsmessung. Zur Prüfung der metallischen Druckbehälter ist bevorzugt ein Frequenzbereich von 100 bis 300 kHz vorgesehen. Der Frequenzbereich wird vor allem vom Sensor selbst, und von den gewählten Frequenzfiltern beziehungsweise vom Frequenzgang der Messkette bestimmt. Die Filtereinstellungen werden bevorzugt so gewählt, dass die untere Registriergrenze 36 dB beträgt; dies gilt bevorzugt für oberirdische und halboberirdische Behälter sowie für unterirdische Behälter mit Epox-Beschichtung und unterirdische Behälter mit Bitumen-Beschichtung und 2 t oder weniger. Für unterirdische Behälter mit Bitumenbeschichtung mit mehr als 2 t gilt bevorzugt eine untere Registriergrenze von 30 dB. Die Registriergrenze (Nachweisschnelle) wird bevorzugt mit Hilfe der aufgenommenen Schallschwächungskurve über dem Spitzenwert des Hintergrundgeräusches festgelegt.

Bei Bitumen-beschichteten Behältern, besonders bei unterirdischer Lagerung, sieht die Erfindung bevorzugt die Verwendung von Sensoren vom Typ DT 61 oder R 61 oder vergleichbare Sensoren vor, ist aber nicht auf diese beschränkt. Bei oberirdischen und halboberirdischen Behältern sowie unterirdischen Behältern mit Epox-Beschichtung sieht die Erfindung bevorzugt die Verwendung von Sensoren des Typs DT 1 51 oder R 1 51 oder vergleichbaren Sensoren vor, ist aber nicht auf diese beschränkt. Solche Sensoren werden bekanntermaßen zur Registrierung akustischer Emissionen von Behälterwänden nach dem Stand der Technik eingesetzt; der Fachmann kennt einschlägig verwendbare Sensoren mit analogen Eigenschaften.

Die erfindungsgemäß angewendete Prüftechnik enthält bevorzugt folgende Teile:
- Aufnahmesystem, welches in der Lage ist, die gesamte zu prüfende Struktur mit ausreichender Empfindlichkeit zu erfassen und vorzugsweise zusätzlich auftretende Störeinflüsse (Witterungseinflüsse, Leckagen, Vibrationen, elektrische Störungen, starke Sender) zu registrieren und gegebenenfalls anzuzeigen; eine EchtzeitÜberwachung der Druckprüfung mit festgelegten Auswertekriterien und gegebenenfalls Alarmsignalen, bei deren Erreichung das Prüfpersonal eindeutige Handlungen zur sicheren Beherrschung der Druckaufbringung durchführen kann;
- Bewertungssystem, das dem Prüfpersonal vor Ort ermöglicht, eine erfindungsgemäße Bewertung des Prüfobjektes durchzuführen, so dass kritische Behälterzustände erkannt und entsprechende Handlungen durchgeführt werden können; und
- gegebenenfalls ein Analysesystem, das im Zuge einer Nachauswertung der aufgezeichneten Messdaten eine Bewertung und Klassifizierung des Prüfobjektes zulässt.

Im Zusammenhang mit der Erfindung wird unter "Flüssiggas" allgemein durch Kühlung und/oder Kompression verflüssigtes Gas oder Gasgemisch verstanden, das, um flüssig zu bleiben, unter Druck steht. Im engeren Sinne wird darunter LPG (Liquified Petroleum Gas oder Low Pressure Gas; Autogas), Propan, Butan und deren Gemische verstanden, die bei Raumtemperatur unter vergleichsweise geringem Druck flüssig bleiben und bevorzugt als Treibstoff für Ottomotoren, als Kältemittel oder Heizzwecken dienen. Bevorzugte Bestandteile von Flüssiggas sind: Propan, Propen (Propylen), Butan, Buten (Butylen), Isobutan (Methylpropan) und/oder Isobuten (Methylpropen). Besonders bevorzugt wird unter Flüssiggas ein Gemisch aus Propan und Butan verstanden, wobei der Propangehalt überwiegt (z.B. 60% Propan, 40% Butan). Ein anderes Beispiel ist Butan als der einzige wesentliche Bestandteil des Flüssiggases.

### Ausführungsbeispiele

Die Erfindung wird durch die nachfolgenden Beispiele näher erläutert, ohne dass diese beschränkend zu verstehen sind.

**Beispiel 1: Schallemissionsprüfung an Flüssiggaslaperbehältern**

| | | | |
|---|---|---|---|
| Bauart: | einfache Geometrie, Zylindermantel mit gewölbten Böden und Kugelform | | |
| Werkstoffe: | Kesselbleche aus Stahl gemäß Werkstoffgruppe 1.1 bis 1.3 nach EN 13445 - Teil 2, | | |
| | WSTE | nach | DIN 17 102, |
| | P 355NL1 | nach | DIN EN 10 028-3, |
| | St 52-3 | nach | DIN 17 100 |
| Befüllung: | Druckraum gefüllt mit nicht korrosiv wirkendem Flüssiggas nach DIN 51622 | | |
| Aufstellung: | erdgedeckt und halberdgedeckt eingelagerte Flüssiggaslagerbehälter | | |
| Oberfläche: | unbehandelte, lackierte oder beschichtete Oberfläche (Epoxidharz- bzw. Bitumenbeschichtung) | | |
| Prüftemperatur: | Umgebungstemperatur, jedoch nicht kleiner + 5° C; bei Umgebungstemperaturen um 0°C oder darunter, ist bei Gefahr von Eisbildung an der Behälterwandung die Prüfung unzulässig. Treten Umgebungstemperaturen unter +5°C auf, ist mit Störeinflüssen durch die Rückverflüssigung zu rechnen, wodurch die Anwendbarkeit des Verfahrens eingeschränkt sein kann. | | |

**Folgende Normen kommen zur Anwendung (Stand Januar 2008):**

| | | |
|---|---|---|
| DIN EN 473 | 03/2001 (alt), | neu: 01/2006 |
| DIN EN 1330-9 | 03/2000 (alt), | neu: 01/2008 |
| DIN EN 13477-1 | 04/2001 (alt), | |
| DIN EN 13477-2 | 04/2001 (alt), | |
| DIN EN 13554 | 07/2002 (alt), | |
| DIN EN 14584 | 11/2002 (alt), | neu: 11/2005 |
| DIN EN 12818 | 08/2002 (alt), | neu: 05/2006 |
| DIN EN 12819 | 08/2002 (alt), | neu: Entwurf 03/2008 |
| Pr EN 12817 (neu) | | neu: 2007 (wie DIN 12818 nur ober- und unterirdisch) |
| DIN EN 10028-3 | 09/2003 (alt), | |
| DIN EN 17100 | ersetzt durch DIN 10023 | |
| DIN EN 17102 | ersetzt durch DIN 10028-3 | DIN EN 10028-3 |

Die Flüssiggaslagerbehälter werden am Aufstellungsort überprüft. Die Flüssiggasanlage kann weiterbetrieben werden. Die Entnahme wird stark eingeschränkt. Die Entnahmeverhältnisse dürfen auf keinen Fall zur Vereisung führen.

Die angewandte Prüftechnik wird so eingesetzt, dass keine negative Beeinflussung der Flüssiggaslagerbehälter entstehen kann und dass eine ausreichende, über die gesamte Struktur, umfassende Aussage über den Zustand getroffen werden kann. Treten hierüber Zweifel auf und sind negative Einflüsse durch geeignete Maßnahmen nicht zu beseitigen, wird das Prüfverfahren nicht angewandt.

Der Sensortyp sowie die Applikationsorte der Sensoren werden so gewählt, dass eine 100%ige volumetrische Überwachung des zu prüfenden Flüssiggaslagerbehälters erreicht wird. Es wird auf bekannte Maßnahmen zur Ermittlung der Applikationsorte zurückgegriffen. Dies gilt als ausreichend gewährleistet, wenn ein Signal mit K dB unter der HSU-Nielsen-Quelle (Bleistiftminen 0,5 mm; 2H) an jeder Stelle am Behälter detektiert werden kann. Die K-Werte werden in Anlehnung an die EN 13445-5, Anhang E mit etwa 12 dB für erdgedeckte und halberdgedeckte Behälter festgelegt.

Es wird eine mehrkanalige Schallemissions-Mess-Anlage entsprechend EN 13477 Teil 1 eingesetzt. Die Betriebskenngrößen des Prüfgerätes werden in regelmäßigen Abständen gemäß EN 13477 Teil 2 überprüft und nachgewiesen. Es werden piezoelektrische Sensoren mit einem Empfindlichkeitsmaximum im Frequenzbereich von 30 - 150 kHz eingesetzt. Bei der Auswahl der geeigneten Sensoren wird auf eine ausreichende Sensitivität über den gesamt zu überwachenden Prüfbereich geachtet. Insbesondere werden nur solche Sensoren verwendet, deren Sensitivität im jeweiligen Frequenzbereich eine vollständige Überwachung in Abhängigkeit der geometrischen Abmessungen des Prüfobjektes und der vorliegenden Schallschwächung im Wandungsmaterial zulässt.

Die lokale Freilegung von Applikationsstellen für die Sensoren am Behälter wird nur mit solchen Technologien durchgeführt, die eine Beschädigung des Behälters, auch im Hinblick auf Langzeitschäden (Korrosionen), vermeiden. Insbesondere bei lokaler Entfernung von Bitumenbeschichtungen wird darauf geachtet, dass nach Abschluss der Prüfung ein mindestens gleichwertiger Schutzzustand des Behälters gegeben ist.

Die Anzahl der benötigten Sensoren sowie deren örtliche Lage am Prüfobjekt ist in Abhängigkeit von der verwendeten Messkette (Sensortyp, Frequenz, Verstärker, Filter) und den spezifischen Schallausbreitungseigenschaften zu wählen. Wie oben beschrieben, darf der maximale Schalllaufweg auf der Behälteroberfläche zwischen einer möglichen Quelle bis zum nächstgelegenen Sensor den Abstand dmax nicht überschreiten. Insbesondere bei erdgedeckten Flüssiggaslagerbehältern mit freier Zugänglichkeit nur im Domschachtbereich ist bei Nichterfüllung dieser Forderung durch örtliche Aufgrabung und Applikation zusätzlicher Sensoren diese Mindestanforderung zu erfüllen. Vor Prüfbeginn wird die ordnungsgemäße Applikation des Messsystems durch Anregung mit einer künstlichen Quelle (HSU/Nielsen-Quelle) überprüft. Dies wird nach Beendigung der Prüfung wiederholt, um nachzuweisen, dass gleichartige Applikationsbedingungen über die gesamte Prüfdauer geherrscht haben. Sämtliche aufgezeichnete Daten der Empfindlichkeitsmessungen werden der Prüfdokumentation beigelegt.

Die Druckaufbringung wird mit dem Betriebsmedium selbst (Gasphase) infolge Verdampfung der Flüssigphase in einer mobilen Arbeitsmaschine durchgeführt. Die Druckaufbringung erfolgt über die Gasphase auf den vorhandenen Flüssigphasenpegel. Bei der Druckaufbringung mit Flüssiggas (Gasphase) soll es zu keiner weiteren Energiezuführung in das Fluid kommen, so dass der physikalische Prozess der Rückverflüssigung und der damit verbundene Druckabbau unmittelbar einsetzt.

Vor dem Beginn der Druckaufbringung wird, soweit möglich, die technische Dichtheit des Behälters überprüft. Sollten hierbei bereits nennenswerte Undichtheiten festgestellt werden, wird die Druckaufbringung nicht ohne deren vorherige Behebung durchgeführt. Weiter wird vor Beginn der Druckaufbringung geprüft, ob sonstige, die Prüfdurchführung negativ beeinflussende Störungen vorliegen. Die Druckaufbringung kann nur dann durchgeführt werden, wenn sämtliche Störeinflüsse derart minimiert wurden, dass eine Beeinträchtigung der Prüfaussage ausgeschlossen werden kann.

Der Druckaufbau beginnt ausgehend von dem momentan anstehenden Betriebsdruck im Behälter und wird kontinuierlich bis zum Erreichen des Prüfdruckes fortgesetzt. Die mittlere Drucksteigerungsrate beträgt 0,2 bis 0,3 bar/min. Die zu erreichenden Prüfdrücke sind wie folgt festgelegt: bei erdgedeckten Flüssiggaslagerbehältern: ≥10 bar, bei halberdgedeckten Flüssiggaslagerbehältern: ≥12,5 bar.

Die Druckerhöhung wird in jedem Fall bis 10% über den jeweils vorhandenen Behälterdruck geführt. Werden während der Drucksteigerung auffällige Anzeigen detektiert, welche auf eine Quelle B oder C laut Prüfanweisung hindeuten, so wird eine fünfminütige Haltephase eingelegt. Nach Erreichen des Prüfdruckes werden die Schallemissionsaktivitäten über einen Zeitraum von mindestens 5 Minuten ohne Druckerhöhung weiter registriert. Ein etwaiger Druckabfall auf Grund von Rückverflüssigung des Betriebsmediums innerhalb der Haltephase wird nicht ausgeglichen.

### Beispiel 2: Konkrete Prüfanweisung

1. Ordnungsprüfung und Kontrolle des Füllstandes in dem Flüssiggaslagerbehälter
2. Kontrolle Gasfreiheit mittels Gaswarngerät
3a. erdgedeckter Flüssiggaslagerbehälter:
   Anbringung von 2 AT-Sensoren, um 180° versetzt, neben dem Domschacht auf dem Scheitel des Behälters; Verkabelung der AT-Sensoren mit dem AT-Messgerät über BNC-Kabel; bei Epoxidharzbeschichtung: Sensor R15I / DT15I; bei Bitumenbeschichtung: Sensor R6I / DT6I; bei (Bitumenbeschichtung für die Applikation der Sensoren entfernen)
3b. halboberirdischer Flüssiggaslagerbehälter
   Anbringung von 2 AT-Sensoren ca. 100 mm neben den Rundnähten auf dem Scheitel des Behälters; Verkabelung der AT-Sensoren mit dem AT- Messgerät über BNC-Kabel; bei Epoxidharzbeschichtung: Sensor R15I /DT15I
4. Anschluss der Druckaufbringungsanlage und des Drucksensors / Prüfmanometers an den Flüssiggaslagerbehälter; Schlauch der Gasphase an das Füllventil; Schlauch der Flüssigphase an das Flüssigphaseventil; Drucksensor und Prüfmanometer an den Prüfanschluss der Überfüllsicherung; Verbindung des Drucksensors mit dem AT-Messgerät über entspr. Messkabel
5. Messung des ASL vom gesamten Prüfsystem, um herauszufinden, ob Störgeräusche vorhanden sind (z.B. Vibrationen von Teilen, starke Sender)
6. Prüfung der Ankoppelung jedes einzelnen Sensors mittels Hsu - Nielsen - Quelle: Eine Druckbleistiftmine der Härte 2H und Durchmesser 0,5 mm wird auf der Druckbehälteroberfläche ca. 10 mm vom jeweiligen Sensor entfernt gebrochen. Die mittlere Amplitude von 3 Signalen an jedem Sensor muss innerhalb von ≤ 3 dBAE vom Mittelwert aller Sensoren liegen. Zwischen den Kanälen ist eine maximale Abweichung von ≤ 3 dBAE erlaubt. Jede Abweichung vom vorgeschriebenen Bereich muss korrigiert werden. Das geforderte Antwortsignal ist bei: epoxidharzbeschichteten Behältern mit Sensor R 15 I / DT 15 I: >90 Db; bei bitumenbeschichteten Behältern mit Sensor R 6 I / DT 6 I: >96 dB
7. Erwärmen des Flüssiggases über die Gastherme in den beheizbaren Druckbehältern bis auf 20 bar
8. Beginn der Druckaufbringung, Steuerung der Drucksteigerungsrate erfolgt über Kugelhahn. Bei halboberirdischen Flüssiggaslagerbehältern ist ein Druck von mindestens 12,5 bar, bei erdgedeckten Flüssiggaslagerbehältern von mindestens 10 bar aufzubringen. Der Druckaufbau beginnt mit dem momentanen Betriebsdruck des Behälters und wird kontinuierlich bis zum Erreichen der oben genannten Prüfdrücke fortgesetzt. Während der Druckaufbringung ist der Vorgang am Schallemissionsgerät zu überwachen.
9. Nach dem Erreichen des entsprechenden Druckendwerts, ist eine Haltephase von mindestens 5 Minuten zu halten.
10. Nach der Prüfung sind die beheizbaren Druckbehälter über die Flüssigphaseleitung mittels der Flüssigphasenpumpe zu füllen. Sind die Behälter gefüllt, kann die Druckaufbringung und das Meßsystem vom Flüssiggaslagerbehälter getrennt werden.
11. Alle Verbindungen am Flüssiggaslagerbehälter sind mit Lecksuchmittel auf Dichtheit zu kontrollieren. Bei bitumenbeschichteten Flüssiggaslagerbehältern sind die Applikationsstellen der Sensoren wieder zu versiegeln.
12. Die Befundung und Bewertung der Prüfung wird automatisch gemäß den erfindungsgemäßen Bewertungskriterien durchgeführt.

## Patentansprüche

1. Verfahren zur Prüfung von metallischen Druckbehältern für Flüssiggas, enthaltend einen ersten Prüfzyklus mit den Schritten: Steigern des Drucks im Druckbehälter in Richtung eines Druckendwerts (Druckaufbringung), Registrieren der während der Druckaufbringung und gegebenenfalls bei Erreichen des Druckendwerts in der Behälterwand entstehenden akustischen Ereignisse (Schallemissionen) mittels an die Behälterwand gekoppelter Sensoren bei einer unteren Registriergrenze von 30 dB-AE, Klassifizieren der registrierten akustischen Ereignisse nach folgenden Kriterien und gegebenenfalls Durchführen eines unmittelbar nachfolgenden weiteren Prüfzyklus mit einem um 10 % gegenüber der ersten Druckprüfung erhöhten Druckendwert:
- Klasse A (geringe Quellen, unkritisch), wenn die Zahl der transienten akustischen Ereignisse (Hits) pro 1 bar Drucksteigerung 400 oder weniger und/oder die Zahl der Überschwinger in einem transienten akustischen Ereignis innerhalb von 18 Sekunden 400 oder weniger beträgt und dabei bei keinem transienten akustischen Ereignis die Maximalamplitude von 75 dB-AE überschritten wird;
- Klasse B (aktive Quellen), wenn die Zahl der transienten akustische Ereignisse pro 1 bar Drucksteigerung über 400 und bis zu 2.000 und/oder die Zahl der Überschwinger in einem transienten akustischen Ereignis innerhalb von 18 Sekunden über 400 und bis zu 4.000 beträgt und dabei bei nicht mehr als 6 der registrierten transienten akustischen Ereignisse die Maximalamplitude von 75 dB-AE überschritten wird;
- Klasse C (kritische Quellen), (a) wenn mindestens einer der für Klasse B genannten Parameter überschritten wird oder (b) wenn ein bei der ersten Druckprüfung des Druckbehälters in Klasse B zu kategorisierende akustische Ereignisse registriert wurden und bei dem weiteren Prüfzyklus mit einem um 10 % gegenüber der ersten Druckprüfung erhöhtem Druck wiederum eine Kategorisierung der registrierten akustischen Ereignisse in Klasse B erfolgen muss.

2. Verfahren nach Anspruch 1, wobei ein Druckbehälter, welcher in die Klasse C klassifizierte registrierte akustische Ereignisse aufweist, die Prüfung nicht bestanden hat (Prüfkriterium).

3. Verfahren nach Anspruch 1 oder 2, wobei die Klassifizierung automatisch und während der Registrierung der akustischen Ereignisse erfolgt.

4. Verfahren nach einem der vorstehenden Ansprüche, wobei die Klassifizierung anhand von während der Druckaufbringung im Bereich von 8 bis 13 bar registrierten akustischen Ereignissen erfolgt.

5. Verfahren nach einem der vorstehenden Ansprüche, wobei die Druckaufbringung unterbrochen und gegebenenfalls abgebrochen wird, sobald die akustischen Ereignisse die Kriterien der Klasse C erfüllen (Abbruchkriterium).

6. Verfahren nach einem der vorstehenden Ansprüche wobei, falls die registrierten akustischen Ereignisse die Kriterien der Klasse B erfüllen, anschließend eine ergänzende Prüfung durch innere Prüfung der Schweißnähte und/oder durch Wasserdruckprüfung mit erhöhtem Prüfdruck erfolgt.

7. Verfahren nach einem der vorstehenden Ansprüche, weiter **dadurch gekennzeichnet, dass** die Druckaufbringung zur Vermeidung impulsbehafteter Strömung ausschließlich mittels Verdampfung eines verdampfbaren Medium erfolgt.

8. Verfahren nach Anspruch 7, wobei die Verdampfung des Mediums in mindestens einer externen Druckvorlage erfolgt, die mit dem Druckbehälter in Verbindung steht.

9. Verfahren nach Anspruch 7 oder 8, wobei zur Verdampfung eine Temperaturerhöhung mittels mindestens eines Wärmetauschers erfolgt.

10. Verfahren nach Anspruch 8 oder 9, wobei die externe Druckvorlage mit dem Druckbehälter über die Flüssigphase in Verbindung steht und die Druckaufbringung über die Flüssigphase erfolgt.

11. Verfahren nach einem der Ansprüche 7 bis 10, wobei bei der Drucksteigerung die Drucksteigerungsrate im Druckbehälter über mindestens eine Düse oder einen Schieber, der in der Verbindungsleitung zwischen Druckbehälter und externer Druckvorlage angeordnet ist, gesteuert oder geregelt wird.

12. Verfahren nach einem der Ansprüche 7 bis 11, wobei das verdampfbare Medium einen hohen Dampfdruck aufweist, der geeignet ist, bei Temperaturerhöhung den gewählten Druckendwert hervorzubringen, und mit dem im Druckbehälter gegebenenfalls vorliegenden Betriebsgas ein zündfähiges Gemisch bildet.

13. Verfahren nach Anspruch 12, wobei das verdampfbare Medium Propan ist.

## Claims

1. A method for testing metal pressure vessels for liquid gas, the method comprising a first test cycle having the following steps: increasing the pressure in the pressure vessel towards a final pressure value (pressure application); registering the acoustic events (sound emissions) occurring in the vessel wall at a lower registration limit of 30 dB-AE during pressure application and, if so, when the final pressure value is reached, by means of sensors coupled to the vessel wall; classifying the registered acoustic events according to the following criteria and, if necessary, carrying out an immediately following further test cycle at a final pressure value increased by 10 % as compared to the first pressure test:
- Class A (minor sources, non-critical), if the number of transient acoustic events (hits) per 1 bar pressure increase is 400 or less and/or the number of overshoots in a transient acoustic event is 400 or less within 18 seconds and, therein, the maximum amplitude of 75 dB-AE is not exceeded in any of the transient acoustic events;
- Class B (active sources), if the number of transient acoustic events per 1 bar pressure increase is more than 400 and up to 2,000 and/or the number of overshoots in a transient acoustic event is more than 400 and up to 4,000 within 18 seconds and, therein, the maximum amplitude of 75 dB-E is not exceeded in more than 6 of the registered transient acoustic events;
- Class C (critical sources) when (a) at least one of the parameters specified for Class B is exceeded or when (b) an acoustic event to be categorized into Class B during said first pressure test of the pressure vessel is registered, and, in said further test cycle, the registered acoustic events are again be categorized into Class B at a pressure increased by 10 % as compared to said first pressure test.

2. The method according to claim 1, wherein a pressure vessel comprising registered acoustic events classified as being Class C failed to pass the test (test criterion).

3. The method according to claim 1 or 2, wherein the classification is made automatically and while the acoustic events are registered.

4. The method according to any one of the preceding claims, wherein the classification is made based on acoustic events that are registered while said pressure application is within a range from 8 to 13 bar.

5. The method according to any one of the preceding claims, wherein said pressure application is interrupted and, where appropriate, is stopped as soon as the acoustic events fulfil the criteria of Class C (stop criterion).

6. The method according to any one of the preceding claims, wherein when the registered acoustic events fulfil the criteria of Class B a supplementary test is carried out, being an inner test of the weld seams and/or a hydraulic pressure test at an increased test pressure.

7. The method according to any one of the preceding claims, further **characterized in that**, in order to prevent a pulsatile flow, said pressure application is achieved exclusively by vaporizing of a vaporizable medium.

8. The method according to Claim 7, wherein said medium is evaporated in at least one external pressure reservoir being in communication with the pressure vessel.

9. The method according to Claim 7 or 8, wherein, said evaporation is accomplished by increase of temperature by means of at least one heat exchanger.

10. The method according to Claim 8 or 9, wherein the pressure reservoir fluid is in communication with the pressure vessel via the liquid phase and the pressure application is achieved via said liquid phase.

11. The method according to any one of Claims 7 to 10, wherein, while the pressure is being increased, the pressure increase rate in the pressure vessel is controlled or regulated via at least one nozzle or slide which is arranged in the connecting line between the pressure vessel and the external pressure reservoir.

12. The method according to any one of Claims 7 to 11, wherein the vaporizable medium has a high vapour pressure which is capable of producing the selected final pressure value when the temperature is being increased and which forms an inflammable mixture together with the operating gas being present in the pressure vessel as the case may be.

13. The method according to Claim 12, wherein the vaporizable medium is propane.

## Revendications

1. Procédé d'essai de récipients sous pression métalliques pour du gaz liquéfié, comprenant un premier cycle d'essai avec les étapes : d'augmentation de la pression dans le récipient vers une valeur finale de pression (application de la pression), enregistrement des événements acoustiques (émissions sonores) se produisant dans la paroi du récipient pendant l'application de pression et le cas échéant lorsque la valeur finale de pression est atteinte, au moyen de capteurs couplés à la paroi du récipient à une limite d'enregistrement inférieure de 30 dB-AE, classement des événements acoustiques enregistrés selon les critères suivants et le cas échéant, réalisation d'un cycle d'essai supplémentaire immédiatement consécutif avec une valeur finale de pression augmentée de 10 % par rapport au premier essai de pression :
- Classe A (peu de sources, non critique) lorsque le nombre des événements acoustiques transitoires (hits) par 1 bar d'augmentation de la pression est de 400 ou moins et/ou que le nombre des dépassements dans un événement acoustique transitoire en l'espace de 18 secondes est de 400 ou moins et qu'avec aucun événement acoustique transitoire, l'amplitude maximale de 75 dB-AE est dépassée ;
- Classe B (sources actives), lorsque le nombre des événements acoustiques transitoires par 1 bar d'augmentation de la pression est supérieur à 400 et jusqu'à 2000 et/ou que le nombre des dépassements dans un événement acoustique transitoire en l'espace de 18 secondes est supérieur à 400 et jusqu'à 4000 et qu'avec pas plus de 6 des événements acoustiques transitoires enregistrés, l'amplitude maximale de 75 dB-AE est dépassée ;
- Classe C (sources critiques), (a) lorsqu'au moins un des paramètres cités pour la classe B est dépassé ou (b) lorsqu'un événement acoustique à catégoriser dans la classe B lors du premier essai de pression du récipient a été enregistré et que lors d'un cycle d'essai supplémentaire avec une pression augmentée de 10 % par rapport au premier essai de pression, une catégorisation en classe B des événements acoustiques enregistrés doit de nouveau être effectuée.

2. Procédé selon la revendication 1, dans lequel un récipient sous pression qui présente des événements acoustiques enregistrés classés dans la classe C n'a pas réussi l'essai (critère d'essai).

3. Procédé selon la revendication 1 ou 2, dans lequel le classement est effectué automatiquement et pendant l'enregistrement des événements acoustiques.

4. Procédé selon l'une des revendications précédentes, dans lequel le classement est effectué à l'aide d'événements acoustiques enregistrés dans la plage de 8 à 13 bar pendant l'application de pression.

5. Procédé selon l'une des revendications précédentes, dans lequel l'application de pression est interrompue et le cas échéant annulée, dès que les événements acoustiques remplissent les critères de la classe C (critères d'annulation).

6. Procédé selon l'une des revendications précédentes, dans lequel si les événements acoustiques enregistrés remplissent les critères de la classe B, un essai complémentaire a lieu ensuite par un essai des cordons de soudure et/ou par un essai de la pression de l'eau avec une pression d'essai augmentée.

7. Procédé selon l'une des revendications précédentes, **caractérisé en outre en ce que** l'application de pression pour éviter l'écoulement chargé d'impulsions a lieu exclusivement au moyen de la vaporisation d'un agent évaporable.

8. Procédé selon la revendication 7, dans lequel la vaporisation de l'agent a lieu dans au moins un contenant sous pression externe qui est en liaison avec le récipient de pression.

9. Procédé selon la revendication 7 ou 8, dans lequel une augmentation de température au moyen d'au moins un échangeur de chaleur est effectuée pour la vaporisation.

10. Procédé selon la revendication 8 ou 9, dans lequel le contenant sous pression externe est en liaison avec le récipient sous pression par la phase liquide et l'application de pression se fait par la phase liquide.

11. Procédé selon l'une des revendications 7 à 10, dans lequel, lors de l'augmentation de pression, la vitesse d'augmentation de la pression dans le récipient sous pression est réglée ou régulée par au moins une buse ou une vanne qui est disposée dans la ligne de liaison entre le récipient sous pression et le contenant sous pression externe.

12. Procédé selon l'une des revendications 7 à 11, dans lequel le milieu évaporable présente une pression de vapeur élevée qui, lors de l'augmentation de température, est appropriée pour fournir la valeur de pression finale sélectionnée et forme un mélange inflammable avec le gaz de service éventuellement présent dans le récipient sous pression.

13. Procédé selon la revendication 12, dans lequel le milieu évaporable est du propane.
